**Europäisches Patentamt**

**European Patent Office**

**Office européen des brevets**

(19)

(11) Veröffentlichungsnummer: **0 071 889**
**B1**

(12) **EUROPÄISCHE PATENTSCHRIFT**

(45) Veröffentlichungstag der Patentschrift:
**16.10.85**

(51) Int. Cl.⁴: **B 63 B 25/24,** B 60 P 7/13

(21) Anmeldenummer: **82106851.7**

(22) Anmeldetag: **29.07.82**

(54) **Zurrstange zum Befestigen von Containern.**

(30) Priorität: **10.08.81 DE 8123436 U**
          **03.09.81 DE 8125939 U**

(43) Veröffentlichungstag der Anmeldung:
**16.02.83 Patentblatt 83/7**

(45) Bekanntmachung des Hinweises auf die Patenterteilung:
**16.10.85 Patentblatt 85/42**

(84) Benannte Vertragsstaaten:
**AT BE CH DE FR IT LI NL SE**

(56) Entgegenhaltungen:
**DE - A - 2 345 379**
**DE - A - 3 009 257**
**GB - A - 2 013 272**
**US - A - 3 709 455**
**US - A - 4 096 816**

(73) Patentinhaber: **Borchardt, Dieter, Rissener**
**Dorfstrasse 45, D-2000 Hamburg 56 (DE)**

(72) Erfinder: **Borchardt, Dieter, Rissener Dorfstrasse 45,**
**D-2000 Hamburg 56 (DE)**

(74) Vertreter: **UEXKÜLL & STOLBERG Patentanwälte,**
**Beselerstrasse 4, D-2000 Hamburg 52 (DE)**

EP 0 071 889 B1

ACTORUM AG

## Beschreibung

Die Erfindung bezieht sich auf eine Zurrstange zum Einhängen in eine Verankerungsöffnung einer Container-Ecke, mit einem an einem Ende vorgesehenen Einhakbeschlag, der einen sich im wesentlichen senkrecht zur Stange erstreckenden Zapfen und eine an diesem befestigte Verriegelungsnase aufweist, die sich zumindest in etwa in Längsrichtung der Stange sowie vom Zapfen in Richtung weg vom entfernten Stangenende erstreckt, wobei die maximale Breite der Verriegelungsnase geringer ist, als die maximale Breite der Verankerungsöffnung einer unteren Container-Ecke, und der Abstand zwischen dem freien Ende der Verriegelungsnase und ihrem gegenüberliegenden Ende bzw. der dem freien Ende der Verriegelungsnase abgewandten Fläche des Zapfens kleiner als die Höhe der Verankerungsöffnung einer unteren Container-Ecke, jedoch so gross ist, dass die Verriegelungsnase in der Spannstellung den Randbereich der stirnseitigen Verankerungsöffnung einer oberen Container-Ecke hintergreift.

Derartige Zurrstangen sind bekannt (z.B. aus DE-A-2345 379) und werden benutzt, um Container auf Schiffsdecks zu befestigen, indem die Einhakbeschläge der Zurrstangen beispielsweise in die Verankerungsöffnungen der oberen Container-Ecke der ersten Lage von Containern sowie in die Verankerungsöffnungen der unteren Container-Ecken der auf dieser Container-Lage ruhenden zweiten Container-Lage eingehängt und dann über Spannelemente, beispielsweise Spannschlösser mit Verankerungspunkten auf Deck verbunden werden derart, dass die Zurrstangen vorzugsweise unter einem Winkel von 45°, im allgemeinen jedoch in einem Winkelbereich von 20° bis 50° bezüglich der Vertikalen verlaufen, um auf diese Weise sowohl vertikale als auch horizontale Kräfte aufzunehmen. Infolge Verankerung der Container mittels derart schräg verlaufender Zurrstangen ergibt sich darüber hinaus eine Diagonalaussteifung der Containerrahmen, so dass diese mit erheblichen, parallel zur Standebene wirkenden Kräften belastet werden können.

Die Verankerungsöffnungen in den unteren Container-Ecken und die seitlichen Verankerungsöffnungen in den oberen Container-Ecken haben jeweils die gleiche genormte Form und Abmessung, nämlich die Form eines senkrechten Rechteckes mit halbkreisförmigen Enden, deren maximale Nenn-Breite 51,00 mm und deren maximale Nenn-Höhe 79,5 mm beträgt. Die bisherigen Zurrstangen der vorstehenden Art wiesen daher an diese Verankerungsöffnung angepasste Einhakbeschläge auf, deren Verriegelungsnase nach dem Einsetzen und Verschwenken der Stange in die schräge Spannlage den Randbereich der Verankerungsöffnung hintergriffen und so die formschlüssige Verbindung zwischen Zurrstange und Container herstellten.

Im Unterschied zu den Verankerungsöffnungen der vorstehend genannten Abmessungen, ist die an der oberen Container-Ecke stirnseitig vorgesehene Verankerungsöffnung zum Eingriff von Kranhaken ausgebildet, und sie hat eine von den übrigen Verankerungsöffnungen abweichende, jedoch auch genormte Form und Abmessung, nämlich im wesentlichen die Form eines Quadrates mit einem halbkreisförmigen unteren Ende und einem schwachgerundeten oberen Ende, wobei die maximale Nenn-Breite 63,5 mm und die maximale Nenn-Höhe 73,0 mm beträgt. Infolge der grösseren Breite dieser Verankerungsöffnungen gegenüber den Verankerungsöffnungen der unteren Container-Ecken und der seitlichen Verankerungsöffnungen der oberen Container-Ecken wird beim Einbringen des Einhakbeschlags einer für die schmaleren Verankerungsöffnungen konzipierten Zurrstange sowie Verschwenken der Stange in die Spannstellung ein geringfügiges, jedoch nicht ausreichendes Hintergreifen der Öffnungswandung durch die Verriegelungsnase erreicht, selbst wenn die Verriegelungsnase eine solche Länge hat, dass sie in der Diagonalen der breiteren Verankerungsöffnung eingesetzt werden muss. Somit eignen sich die bisherigen Zurrstangen der vorstehenden Art praktisch nicht zur Benutzung für die stirnseitigen Verankerungsöffnungen der oberen Container-Ecke bzw. es wird eine sehr unsichere Verankerung erhalten.

Es ist demgegenüber Aufgabe der Erfindung, eine Zurrstange mit einem einfach einhängbaren Einhakbeschlag zu schaffen, der sowohl in den Verankerungsöffnungen der unteren Container-Ecken und der seitlichen Verankerungsöffnung der oberen Container-Ecken als auch in den stirnseitigen Verankerungsöffnungen der oberen Container-Ecken ein sicheres und zuverlässiges Hintergreifen der Randbereiche der Öffnungen ermöglicht und dadurch eine zuverlässige Festlegung der gespannten Zurrstange bewirkt.

Zur Lösung dieser Aufgabe wird eine Zurrstange der eingangs erwähnten Art erfindungsgemäss derart ausgestaltet, dass am Zapfen eine Zusatz-Verriegelungsnase vorgesehen ist, die sich im wesentlichen quer zum Zapfen und quer zur Verriegelungsnase erstreckt und die in der Spannstellung den dem von der Verriegelungsnase hintergriffenen Randbereich gegenüberliegenden Randbereich der stirnseitigen Verankerungsöffnung einer oberen Container-Ecke hintergreift.

Bei der erfindungsgemässen Zurrstange weist somit der Einhakbeschlag zusätzlich zu der üblichen Verriegelungsnase eine weitere Verriegelungsnase auf, die im wesentlichen in der gleichen Ebene liegt, wie die übliche Verriegelungsnase, und die sich im wesentlichen quer zum Zapfen und quer zur üblichen Verriegelungsnase erstreckt. Diese Zusatz-Verriegelungsnase lässt sich bei im wesentlichen nach unten verlaufender Stange durch Kippen und seitliches Einschieben in die Verankerungsöffnung einbringen, so dass sie den seitlichen Randbereich der Wandung der Verankerungsöffnung hintergreift, worauf dann die die Gesamthöhe der stirnseitigen Verankerungsöffnung der oberen Container-Ecke nicht überschreitende übliche Verriegelungsnase in die Verankerungsöffnung eingeführt werden kann. In dieser eingeführten Lage lässt sich die Stange in die Spannstellung, also in eine Lage von üblicherweise 20° bis 50° bezüglich der Senkrechten verschwenken, wodurch ein Verdrehen des Zapfens und Führen der Verriegelungsnase hinter die Begrenzungswand der Verankerungsöffnung erfolgt. Dabei wird die den gegenüberliegenden Wandbereich der Verankerungsöffnung bereits hintergreifende Zusatz-Verriegelungsnase zwar nach oben verschwenkt, behält jedoch ihre die Wand hintergreifende Lage bei.

Bei der erfindungsgemässen Ausbildung kann der maximale Abstand zwischen den freien Enden von Verriegelungsnase und Zusatz-Verriegelungsnase grösser sein, als die maximale Höhe der Verankerungsöffnung einer unteren Container-Ecke, so dass sich bei beiden Formen von Verankerungsöffnungen in der Spannstellung ein ausgeprägtes Hintergreifen von deren Randbereichen durch die Verriegelungsnase und die Zusatz-Verriegelungsnase ergibt, ohne dass diese Abmessungen von Verriegelungsnase und Zusatz-Verriegelungsnase das Einführen in die Verankerungsöffnung beeinträchtigen.

Die Zusatz-Verriegelungsnase muss zusammen mit dem Zapfen selbstverständlich so dimensioniert sein, dass sie sich auch durch entsprechendes Schrägstellen in die schmalere Verankerungsöffnung einführen lässt, also die Abmessungen nicht derart gross gewählt sind, dass die Breite der schmalen Verankerungsöffnung ein derartiges Einführen unmöglich macht. Geeignete Abmessungen lassen sich durch einfache Versuche bestimmen, und es sei erwähnt, dass zum Einführen der Zusatz-Verriegelungsnase der Abstand zwischen einer die dem Zapfen zugewandten Fläche der Zusatz-Verriegelungsnase und die deren freiem Ende benachbarte Mantellinie bzw. -fläche des Zapfens unter jeweils dem gleichen Winkel schneidenden Ebene, deren Schnittlinien mit der dem Zapfen zugewandten Fläche der Zusatz-Verriegelungsnase und der Mantellinie bzw. -fläche einen Abstand voneinander haben, der gleich der Wandstärke des Randes der Verankerungsöffnungen im geradlinigen Öffnungsbereich ist, und einer parallel zu dieser Ebene verlaufenden Ebene durch den am weitesten entfernten Punkt der Zusatz-Verriegelungsnase bzw. des an diese unmittelbar anschliessenden Bereichs des Zapfens an der dem freien Ende der Zusatz-Verriegelungsnase gegenüberliegenden Seite kleiner sein sollte, als die maximale Breite der Verankerungsöffnung der unteren Container-Ecke.

Das freie Ende der Verriegelungsnase erstreckt sich beim Einführen in die Verankerungsöffnung einer unteren Container-Ecke üblicherweise bis in den oberen abgerundeten Bereich der Verankerungsöffnung, wodurch dieses freie Ende das Einführen der Zusatz-Verriegelungsnase behindern kann. Um diese Behinderung zu vermeiden, kann die der Zusatz-Verriegelungsnase abgewandte Seite des freien Endes der Verriegelungsnase in Richtung der Längsachse des Zapfens abgeschrägt werden. Diese Abschrägung kann jedoch dann kleiner ausgeführt oder ganz vermieden werden, wenn beispielsweise die untere Seitenfläche der Zusatz-Verriegelungsnase zu Beginn des Einführvorganges vom Zapfen etwas schräg nach oben verläuft und danach nach unten geschwenkt wird, so dass das freie Ende der Verriegelungsnase vom Rand der Verankerungsöffnung freikommt.

Um zur Einhaltung der Abmessungen für das Einführen der Zusatz-Verriegelungsnase in die schmalere Verankerungsöffnung die Aussenseite der Verriegelungsnase nicht in Richtung vom Zapfen zu ihrem freien Ende zu stark abschrägen zu müssen, kann der entsprechende Freiraum für das Einführen dadurch geschaffen werden, dass der Zapfen an der dem freien Ende der Zusatz-Verriegelungsnase benachbarten Seite abgeflacht ist, wobei die Abflachung im Abstand von der Längsachse der Stange beginnen sollte.

Vorzugsweise schliessen die der Zusatz-Verriegelungsnase abgewandte Seitenfläche der Verriegelungsnase und die der Verriegelungsnase abgewandte Seitenfläche der Zusatz-Verriegelungsnase einen rechten Winkel ein.

Um die beiden Verriegelungsnasen für das Hintergreifen der Wandbereiche aus der Einführstellung in die Spannstellung möglichst weit verschwenken zu können, kann die Längsachse der Stange etwa 5° bis etwa 15° bezüglich der Längsachse der Verriegelungsnase und von der Zusatz-Verriegelungsnase weg geneigt sein. Dadurch erfolgt das Einsetzen des Einhakbeschlages in die Verankerungsöffnung bei sich unter einem Winkel von etwa 5° bis etwa 15° bezüglich der Senkrechten erstreckenden Stange, und zum Verschwenken der Stange in die Spannstellung ist eine Verlagerung zunächst um diesen Winkel in die Senkrechte und dann weiter um den jeweiligen Winkelbereich von etwa 20° bis etwa 50° bezüglich der Senkrechten erforderlich.

Die mit Verriegelungsnase und Zusatz-Verriegelungsnase versehene Zurrstange eignet sich jeweils nur für ein Spannen in einer Richtung, also beispielsweise, in Draufsicht auf eine Verankerungsöffnung gesehen, nur für die Erstreckung der Stange in der Spannstellung schräg nach rechts unten oder schräg nach links unten. Wird jedoch die Stange einer in die Verankerungsöffnung eingesetzten erfindungsgemässen Zurrstange, die für eine Verankerung nach rechts unten ausgebildet ist, nach links verschwenkt, so ist es auch mit Gewalt nicht möglich, sie bis in die entsprechende Spannstellung zu bewegen, weil bei einem solchen Verschwenken der Einhakbeschlag unter Abstützung der unteren Seite der Zusatz-Verriegelungsnase angehoben wird. Dadurch legt sich die Verriegelungsnase an die Deckwand der Container-Ecke an und blockiert so ein weiteres Verschwenken der Stange. Auf diese Weise wird eine Fehlbenutzung sicher vermieden.

Will man demgegenüber eine einzige derartige Zurrstange für beide Zurrichtungen einsetzen, so kann die Stange an ihrer dem freien Ende der Verriegelungsnase abgewandten Seite des Zapfens an diesem befestigt sein, und der Zapfen wird dann über den Verbindungsbereich mit der Stange hinaus verlängert und weist an seinem Ende eine weitere, spiegelbildliche Anordnung aus Verriegelungsnase und Zusatz-Verriegelungsnase auf.

Durch diese spiegelbildliche Anordnung von Verriegelungsnase und Zusatz-Verriegelungsnase steht jeweils eine Anordnung für jede Zurrichtung zur Verfügung, d.h. der Benutzer braucht lediglich die jeweils für die gewünschte Zurrichtung geeignete Anordnung aus Verriegelungsnase und Zusatz-Verriegelungsnase in die Verankerungsöffnung einzusetzen.

Bei einer solchen spiegelbildlichen Anordnung kann jedoch der bei sich in der Spannstellung befindender Zurrstange unbenutzte Teil des Einhakbeschlages das Einhängen von Zurrstangen in höher liegende Verankerungsöffnungen behindern. Um dies zu vermeiden, kann die Stange in einer anderen Ausgestaltung an jedem ihrer Enden einen eine Verriegelungsnase und eine Zusatz-Verriegelungsnase tragenden Zapfen aufweisen, die sich in im wesentlichen der gleichen Richtung von der Stange weg erstrecken, wobei die Zusatz-Verriegelungsnasen an derselben Seite der Stange liegen.

Bei einer derart ausgebildeten Zurrstange dient der Einhakbeschlag an dem einen Stangenende zum Spannen in der einen Zurrichtung und der Einhakbeschlag am anderen Stangenende zum Spannen in der anderen Zurrichtung. Der jeweils nicht in Eingriff mit einer Verankerungsöffnung stehende Einhakbeschlag kann beispielsweise mit dem Spannschloss verbunden werden, mit dem die Zurrstange gespannt wird.

Die Erfindung wird im folgenden anhand der schematisch und vereinfacht Aufführungsbeispiele zeigenden Figuren näher erläutert:

Figur 1 zeigt in einem Schnitt entlang der Linie I–I aus Figur 2 den Einhakbeschlag einer Zurrstange und die schematisch angedeutete Stange.

Figur 2 zeigt in einer Draufsicht den Einhakbeschlag gemäss Figur 1 mit spiegelbildlicher Anordnung von Verriegelungsnasen und Zusatz-Verriegelungsnasen.

Figur 3 zeigt in einer Darstellung ähnlich Figur 1 zwei Stellungen des Einhakbeschlages in einer Verankerungsöffnung einer unteren Container-Ecke.

Figur 4 zeigt in einer Draufsicht die eine Hälfte des Einhakbeschlages aus Figur 2 in zwei Stellungen bezüglich der Verankerungsöffnung einer unteren Container-Ecke.

Figuren 5 und 6 zeigen in Darstellungen entsprechend Figuren 3 und 4 den Einhakbeschlag bezüglich der stirnseitigen Verankerungsöffnung einer oberen Container-Ecke.

Figuren 7 und 8 zeigen in zwei Ansichten eine Zurrstange, die an jedem Ende einen Einhakbeschlag aufweist.

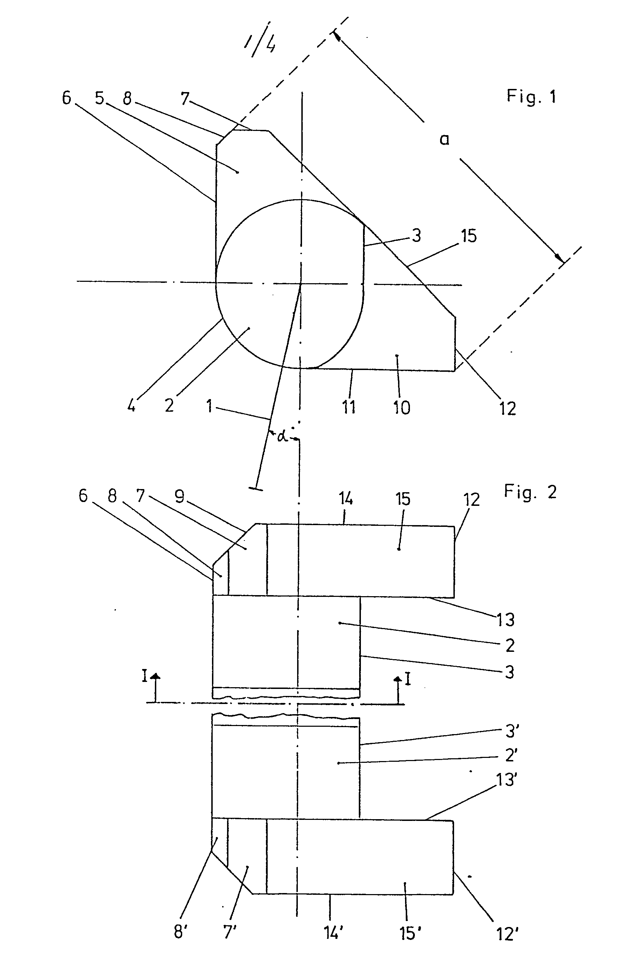

Der in den Figuren 1 und 2 dargestellte Einhakbeschlag weist einen Zapfen 2,2' auf, an dem im in Figur 2 weggebrochenen Bereich die in Figur 1 schematisch angedeutete Stange 1 befestigt ist. Dabei verläuft der Zapfen im wesentlichen senkrecht zur Stange 1 bzw. ist vom Befestigungsbereich der Stange nach aussen geringfügig nach oben geneigt. Wie Figur 2 zu entnehmen ist, sind an beiden Enden des Zapfens spiegelbildlich eine Verriegelungsnase 5 bzw. 5' und eine Zusatz-Verriegelungsnase 10 bzw. 10' vorgesehen. Für das Verständnis der Erfindung wird nur die Anordnung der Verriegelungsnase 5 und der Zusatz-Verriegelungsnase 10 beschrieben, und die spiegelbildliche Anordnung ist lediglich dann notwendig, wenn die Zurrstange für das Spannen in zwei Richtungen geeignet sein soll.

Die Verriegelungsnase 5 erstreckt sich in Figur 1 nach oben, so dass zwischen ihrer Längsachse und der Stange 1 ein Winkel $\alpha$ gebildet ist, der beispielsweise zwischen 5° und 15° liegen kann. Die Verriegelungsnase 5 hat eine tangential bezüglich der kreisförmigen Umfangsfläche 4 des Zapfens 2 verlaufende Seitenfläche 6, die am freien Ende in eine unter etwa 45° verlaufende schräge Fläche 8 übergeht, an die sich senkrecht zu Seitenfläche 6 verlaufende obere Endfläche 7 anschliesst. Ferner erstreckt sich die Aussenfläche der Verriegelungsnase 5 über ihren grössten Bereich 9 unter 45° von der Seitenfläche 6 in Richtung zur Aussenfläche 14 der Zusatz-Verriegelungsnase 10. Die Bedeutung dieser Abschrägung wird später erläutert werden.

Die Zusatz-Verriegelungsnase 10 liegt in der gleichen Ebene wie die Verriegelungsnase 5 und hat im wesentlichen die gleiche Dicke. Sie erstreckt sich rechtwinkelig zur Verriegelungsnase 5, wobei ihre tangential in den kreisförmigen Teil des Zapfens 2 übergehende Seitenfläche 11 unter einem Winkel von 90° bezüglich der Seitenfläche 6 der Verriegelungsnase 5 verläuft. Von der rechtwinklig zur Seitenfläche 11 verlaufenden Endfläche 12 erstreckt sich eine, bei den Verriegelungsnasen 5 und 10 gemeinsame, unter 45° bezüglich der Seitenflächen 6 und 11 verlaufende Querfläche 15, die die Umfangsfläche des Zapfens 2 berührt. Der an sich kreiszylindrische Zapfen geht über einen Abrundungsbereich mit grösserem Radius, welcher sich an den Übergang der Seitenfläche 11 in die kreisförmige Umfangsfläche 4 des Zapfens 2 anschliesst, in einen ebenen Bereich 3 über, der parallel zur Seitenfläche 6 verläuft, jedoch auch zu diesem hin geneigt sein könnte. Dieser ebene Bereich 3 schliesst mit der dem Zapfen 2 zugewandten Fläche 13 der Zusatz-Verriegelungsnase 10 einen rechten Winkel ein.

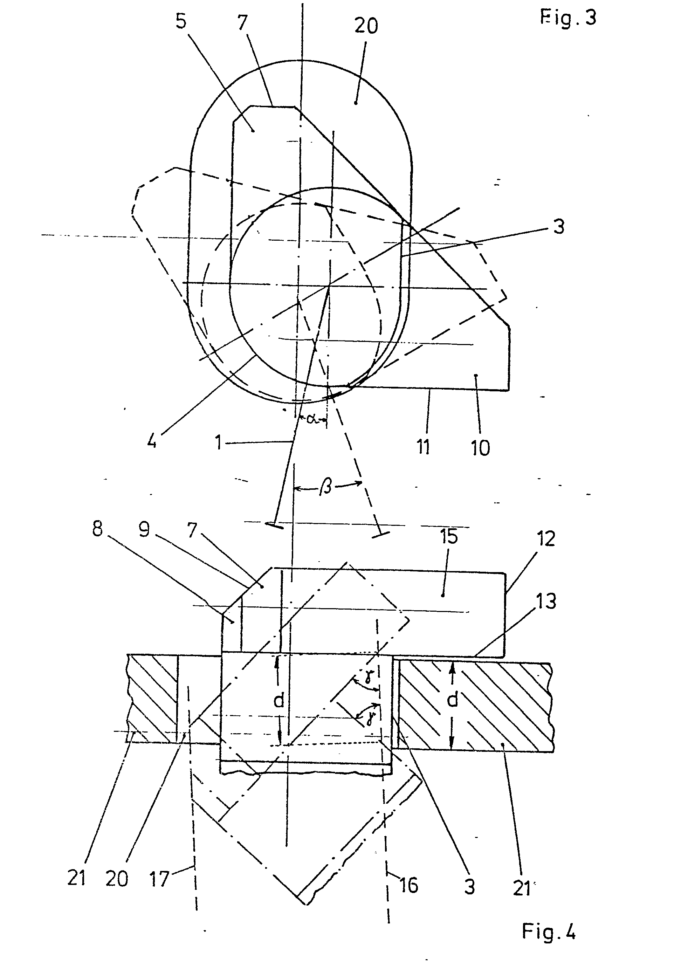

Das Einbringen und Festlegen der Zurrstange gemäss Figuren 1 und 2 in einer Verankerungsöffnung 20 einer unteren Container-Ecke ist in den Figuren 3 und 4 schematisch gezeigt. Zum Einführen in die Verankerungsöffnung 20 wird der Einhakbeschlag schräg gestellt, wie dies strich-punktiert in Figur 4 angedeutet ist, um so die Zusatz-Verriegelungsnase 10 in die ausgezogen in Figur 4 gezeigte Lage zu bringen, in der sie die Wand 21 im Randbereich der Öffnung 20 hintergreift und mit der Fläche 13 an dieser Wand anliegt. Um dieses Einführen in die Öffnung 20 in der in Figur 4 angedeuteten Weise zu ermöglichen, muss der Abstand zwischen den in dieser Figur gestrichelt dargestellten Ebenen 16 und 17 kleiner sein, als die Breite der Öffnung 20. Die Ebene 16 ist so festgelegt, dass sie die Fläche 13 der Zusatz-Verriegelungsnase 10 und den ebenen Bereich 3 des Zapfens 2 unter gleichen Winkeln γ schneidet, und zwar so, dass der Abstand der Schnittlinien mit der Fläche 13 und dem ebenen Bereich 3 gleich der Wandstärke d der Wand 21 ist. Liegen nämlich diese beiden Schnittlinien an den Ecken der Wand 21 an, so dass die Ebene 16 in der Begrenzungsfläche der Verankerungsöffnung 20 liegt, so darf keine Berührung der der Fläche 12 der Zusatz-Verriegelungsnase 10 entfernten Seite mit der gegenüberliegenden Begrenzungsfläche der Verankerungsöffnung 20 erfolgen, damit ein Einführen in die Verankerungsöffnung 20 zum Erreichen der in Figur 4 ausgezogen gezeigten Lage möglich ist. Aus diesem Grund ist auch in diesem kritischen Bereich der Zusatz-Verriegelungsnase 10 die Abschrägung 9 ausgebildet, durch die der Abstand zwischen den Ebenen 16 und 17 verringert wird, während die Abflachung 3 des Zapfens 2 es ermöglicht, diese Seite näher an die in Figur 4 rechte Begrenzungsfläche der Verankerungsöffnung 20 heranzubringen, ohne dass durch die Abschrägung 9 eine zu starke Schwächung der Verriegelungsnase 5 bewirkt wird.

Die schräge Fläche 8 (Figur 1) des freien Endes der Verriegelungsnase 5 ermöglicht das Einführen in die Verankerungsöffnung 20, ohne dass das freie Ende am gekrümmten Rand der Verankerungsöffnung hakt.

In der in Figur 4 ausgezogen gezeigten Lage nimmt der Einhakbeschlag die in Figur 3 ebenfalls ausgezogen gezeigte Stellung ein, wobei die Form des abgeflachten Bereichs 3 des Zapfens 2 sowie der Übergangsbereich zur kreisförmigen Umfangsfläche 4 der Kontur der Verankerungsöffnung 20 angepasst ist. Wird jetzt die Stange 1 durch Verschwenken um den Winkel α in die senkrechte Stellung und dann durch weiteres Verschwenken um den Winkel β in die Spannstellung bewegt, so erfolgt eine Verlagerung der Verriegelungsnase 5 und der Zusatz-Verriegelungsnase 10 in die gestrichelt gezeigte Stellung, in der die Wand 21 an den beiden gegenüberliegenden Seiten der Verankerungsöffnung 20 hintergriffen und dadurch der Einhakbeschlag zuverlässig festgelegt wird. In dieser Lage ruht auch die kreisförmige Umfangsfläche 4 des Zapfens 2 im unteren halbkreisförmigen Randbereich der Verankerungsöffnung 20, und durch nur geringfügige Abweichungen des Radius der kreisförmigen Umfangsfläche 4 vom Radius dieses unteren Randbereichs wird eine flächige Auflage des Zapfens und damit eine gute Verteilung der aufzunehmenden Kräfte erreicht.

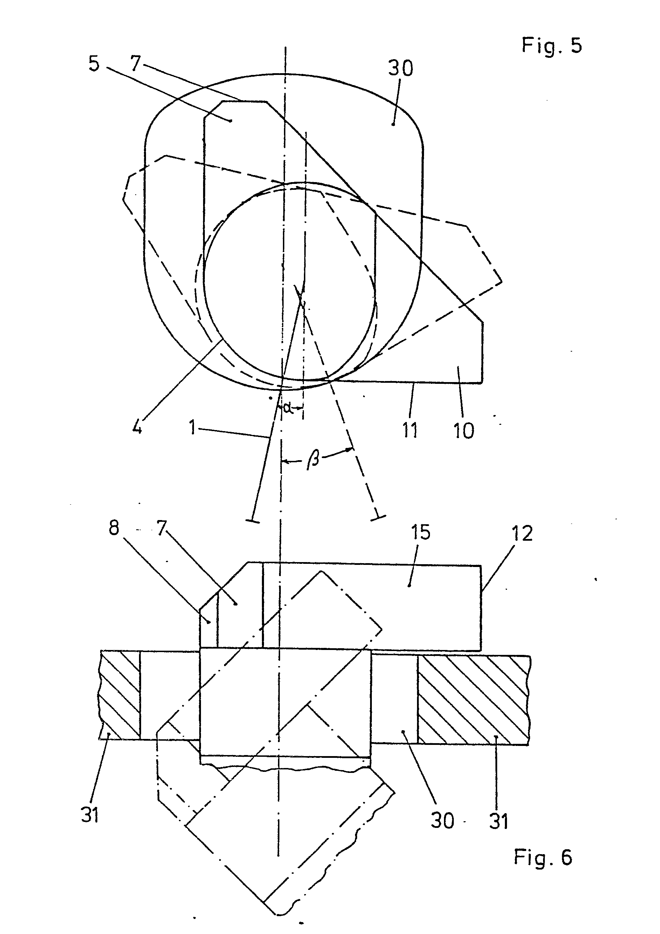

In den Figuren 5 und 6 ist in Darstellungen entsprechend Figuren 3 und 4 das Einsetzen des Einhakbeschlages in eine stirnseitige Verankerungsöffnung 30 einer oberen Container-Ecke gezeigt. Dabei ist das Einführen der Zusatz-Verriegelungsnase in die Verankerungsöffnung wesentlich unkritischer, als das Einführen in die Verankerungsöffnung 20, weil die Breite der Verankerungsöffnung 30 deutlich grösser ist, wobei jedoch auch in diesem Fall ein zuverlässiges Hintergreifen der Wand an gegenüberliegenden Seiten der Verankerungsöffnung erzielt wird.

Es sei erwähnt, dass der in Figur 1 gezeigte Abstand a zwischen den freien Enden von Verriegelungsnase 5 und Zusatz-Verriegelungsnase 10 grösser als die maximale Breite der Verankerungsöffnung 30 und im allgemeinen auch grösser als die maximale Höhe der Verankerungsöffnung 20 ist. Ferner ist es wichtig, die Länge der Verriegelungsnase 5 und die Länge der Zusatz-Verriegelungsnase 10 so zu wählen, dass jede für sich ausreichend lang ist, um die zugehörige Wand zu hintergreifen.

Wie bereits dargelegt, eignet sich eine bestimmte Anordnung von Verriegelungsnase und Zusatz-Verriegelungsnase jeweils nur zum Spannen der Zurrstange in einer Richtung, so dass für das Spannen in der anderen Richtung entweder eine andere Zurrstange verwendet oder eine Zurrstange eingesetzt werden muss, die zwei entsprechende Anordnungen von Verriegelungsnase und Zusatz-Verriegelungsnase aufweist, wie dies beispielsweise in Figur 2 angedeutet ist.

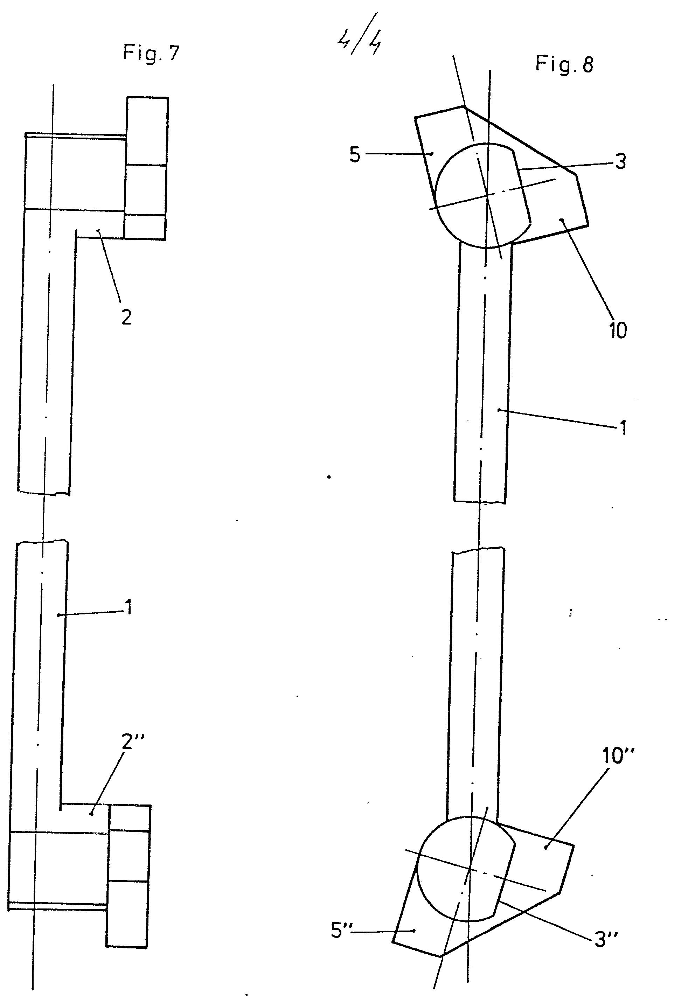

Bei der Anordnung gemäss Figur 2 stehen beispielsweise der Zapfen 2' und die an ihm befestigte Verriegelungsnase und Zusatz-Verriegelungsnase nach aussen über die Stange vor, wenn die Verriegelungsnase 5 und die Zusatz-Verriegelungsnase 10 in die Verankerungsöffnung einer Container-Ecke eingehängt ist. Dieser Überstand kann insbesondere dann, wenn diese Zurrstange in der Verankerungsöffnung einer oberen Container-Ecke befestigt ist, dazu führen, dass das Einhängen einer weiteren Zurrstande in eine Verankerungsöffnung einer darüberliegenden unteren Container-Ecke behindert wird. Derartige Schwierigkeiten werden mit einer Zurrstange vermieden, wie sie in den Figuren 7 und 8 dargestellt ist. Diese Zurrstange weist an einem Ende einen Einhakbeschlag der bereits beschriebenen Form mit einem mit Abflachung 3 versehenen Zapfen 2 und an diesem befestigter Verriegelungsnase 5 und Zusatz-Verriegelungsnase 10 auf. Am gegenüberliegenden Ende der Stange 1 befindet sich ein entsprechend geformter Zapfen 2'', der sich in der gleichen Richtung wie der Zapfen 2 erstreckt, also in der gleichen Axialebene bezüglich der Stange 1 liegt und mit einer Abflachung 3'' versehen ist, die an derselben Seite bezüglich der Stange 1 wie die Abflachung 3 vorgesehen ist. Am Ende des Zapfens 2'' ist eine Verriegelungsnase 5'' und eine Zusatz-Verriegelungsnase 10'' angebracht. Dabei leigt die Zusatz-Verriegelungsnase 10'' an derselben Seite der Stange 1 wie die Zusatz-Verriegelungsnase 10, d.h. Verriegelungsnase und Zusatz-Verriegelungsnase der an den Enden der Stange 1 ausgebildeten Einhakbeschläge sind spiegelbildlich bezüglich einer Normalebene zur Längsachse der Stange 1 ausgebildet.

Wie insbesondere Figur 8 zu entnehmen ist, dient der Einhakbeschlag mit Verriegelungsnase 5 und Zusatz-Verriegelungsnase 10 zum Spannen der Zurrstange schräg nach rechts unten, während der Einhakbeschlag mit der Verriegelungsnase 5'' und der Zusatz-Verriegelungsnase 10'' eingesetzt wird, wenn ein Spannen der Zurrstange schräg nach links unten erforderlich ist. Der jeweils nicht benötigte Einhakbeschlag kann beispielsweise mit einem zum Spannen der Zurrstange verwendeten Spannschloss verbunden werden, das zu diesem Zweck eine Öffnung aufweisen kann, die die gleichen Abmessungen hat, wie die schmalere Verankerungsöffnung 20 (Figur 3) einer Container-Ecke.

## Patentansprüche

1. Zurrstange (1) zum Einhängen in eine Verankerungsöffnung (20, 30) einer Container-Ecke, mit an einem Ende vorgesehenem Einhakbeschlag, der einen sich im wesentlichen senkrecht zur Stange erstreckenden Zapfen (2) und eine an diesem befestigte Verriegelungsnase (5) aufweist, die sich zumindest in etwa in Längsrichtung der Stange sowie vom Zapfen in Richtung weg vom entfernten Stangenende erstreckt, wobei die maximale Breite der Verriegelungsnase geringer ist, als die maximale Breite der Verankerungsöffnung einer unteren Container-Ecke, und der Abstand zwischen dem freien Ende der Verriegelungsnase und ihrem gegenüberliegenden Ende bzw. der dem freien Ende der Verriegelungsnase abgewandten Fläche des Zapfens kleiner als die Höhe der Verankerungsöffnung einer unteren Container-Ecke, jedoch so gross ist, dass die Verriegelungsnase in der Spannstellung den Randbereich der stirnseitigen Verankerungsöffnung einer oberen Container-Ecke hintergreift, dadurch gekennzeichnet, dass am Zapfen (2) eine Zusatz-Verriegelungsnase (10) vorgesehen ist, die sich im wesentlichen quer zum Zapfen (2) und quer zur Verriegelungsnase (5) erstreckt und die in der Spannstellung den dem von der Verriegelungsnase (5) hintergriffenen Randbereich gegenüberliegenden Randbereich der stirnseitigen Verankerungsöffnung (30) einer oberen Container-Ecke hintergreift.

2. Zurrstange nach Anspruch 1, dadurch gekennzeichnet, dass der Zapfen (2) an der dem freien Ende (12) der Zusatz-Verriegelungsnase (10) benachbarten Seite (3) abgeflacht ist.

3. Zurrstange nach Anspruch 1 oder 2, dadurch gekennzeichnet, dass die der Zusatz-Verriegelungsnase (10) abgewandte Seitenfläche (6) der Verriegelungsnase (5) und die der Verriegelungsnase (5) abgewandte Seitenfläche (11) der Zusatz-Verriegelungsnase (10) jeweils tangential bezüglich des Zapfens (2) verlaufen.

4. Zurrstange nach einem der Ansprüche 1 bis 3, dadurch gekennzeichnet, dass die der Zusatz-Verriegelungsnase (10) abgewandte Seitenfläche (6) der Verriegelungsnase (5) und die der Verriegelungsnase (5) abgewandte Seitenfläche (11) der Zusatz-Verriegelungsnase (10) einen rechten Winkel einschliessen.

5. Zurrstange nach einem der Ansprüche 1 bis 4, dadurch gekennzeichnet, dass die Längsachse der Stange (1) um etwa 5° bis etwa 15° bezüglich der Längsachse der Verriegelungsnase (5) und von der Zusatz-Verriegelungsnase (10) weg geneigt ist.

6. Zurrstange nach einem der Ansprüche 1 bis 5, dadurch gekennzeichnet, dass die Stange (1) an ihrer dem freien Ende der Verriegelungsnase (5) abgewandten Seite des Zapfens (2) an diesem befestigt ist und dass der Zapfen (2) über den Verbindungsbereich mit der Stange (1) hinaus verlängert ist und an seinem Ende eine weitere, spiegelbildliche Anordnung aus Verriegelungsnase (5') und Zusatz-Verriegelungsnase (10') aufweist.

7. Zurrstange nach einem der Ansprüche 1 bis 5, dadurch gekennzeichnet, dass die Stange (1) an jedem ihrer Enden einen eine Verriegelungsnase (5; 5'') und eine Zusatz-Verriegelungsnase (10; 10'') tragenden Zapfen (2; 2'') aufweist, die sich in im wesentlichen der gleichen Richtung von der Stange weg erstrecken, wobei die Zusatz-Verriegelungsnasen (10, 10'') an derselben Seite der Stange (1) liegen.

## Revendications

1. Barre d'amarrage (1) destinée à s'accrocher dans une ouverture d'ancrage (20, 30) d'un angle de conteneur, et munie à une extrémité d'une ferrure d'accrochage, qui comporte un téton (2) s'étendant à peu près perpendiculairement à la barre et un talon de verrouillage (5) fixé à ce téton, qui s'étend au moins approximativement dans la direction longitudinale de la barre, ainsi qu'à partir du tourillon dans le sens qui s'éloigne de l'extrémité éloignée de la barre, la largeur maximum du talon de verrouillage étant plus petite que la largeur maximum de l'ouverture d'ancrage d'un angle inférieur de conteneur et la distance entre l'extrémité libre du talon de verrouillage et son extrémité opposée ou la surface du téton qui est la plus éloignée de l'extrémité libre du talon de verrouillage, étant plus petite que la hauteur de l'ouverture d'ancrage d'un angle inférieur de conteneur, mais suffisamment grande pour que dans la position de fixation, le talon de verrouillage s'accroche derrière la région marginale de l'ouverture frontale de face frontale d'un angle supérieur de conteneur, caractérisée en ce que, sur le téton (2), est prévu un talon de verrouillage supplémentaire (10) qui s'étend à peu près transversalement au téton (2) et transversalement au talon de verrouillage (5), et qui, dans la position de fixation, s'engage derrière la région marginale de l'ouverture d'ancrage de face frontale (30) d'un angle supérieur de conteneur qui fait face à la région marginale derrière laquelle est engagé le talon de verrouillage (5).

2. Barre d'amarrage selon la revendication 1, caractérisée en ce que le téton (2) est applati sur le côté (3) voisin de l'extrémité libre (12) du talon de verrouillage supplémentaire (10).

3. Barre d'amarrage selon la revendication 1 ou 2, caractérisée en ce que la surface latérale (6) du talon de verrouillage (5) qui est la plus éloignée du talon de verrouillage supplémentaire (10) et la surface latérale (11) du talon de verrouillage supplémentaire (10) qui est la plus éloignée du talon de verrouillage (5) s'étendent chacune tangentiellement par rapport au téton (2).

4. Barre d'amarrage selon l'une des revendications 1 à 3, caractérisée en ce que la surface latérale (6) du talon de verrouillage (5) qui est la plus éloignée du talon de verrouillage supplémentaire (10) et la surface latérale (11) du talon de verrouillage supplémentaire (10) qui est la plus éloignée du talon de verrouillage (5) forment entre elles un angle droit.

5. Barre d'amarrage selon l'une des revendications 1 à 4, caractérisée en ce que l'axe longitudinal de la barre (1) est incliné d'environ 5° à 15° par rapport à l'axe longitudinal du talon de verrouillage (5) en s'éloignant du talon de verrouillage supplémentaire (10).

6. Barre d'amarrage selon l'une des revendications 1 à 5, caractérisée en ce que la barre (1) est fixée, sur son côté du téton (2) qui est le plus éloigné de l'extrémité libre du talon de verrouillage (5), à ce téton, et en ce que le téton (2) est prolongé au-delà de la région de jonction avec la barre (1) et comporte à son extémité un autre ensemble, symétrique, composé d'un talon de verrouillage (5') et d'un talon de verrouillage supplémentaire (10').

7. Barre d'amarrage selon l'une des revendications 1 à 5, caractérisée en ce que la barre (1) comporte, à chacune de ses extrémité un téton (2; 2") portant un talon de verrouillage (5; 5") et un talon de verrouillage supplémentaire (10; 10"), qui s'étendent à peu près dans la même direction en s'éloignant de la barre, les talons de verrouillage supplémentaires (10; 10") se trouvant du même côté de la barre (1).

## Claims

1. A lashing bar (1) for engaging in an anchoring opening (20, 30) in the corner of a container, having a hook-in shoe provided at one end, which exhibits a pin (2) extending essentially perpendicularly to the bar and, fastened to the pin, a locking-nose (5) which extends at least to a certain degree in the direction longitudinal to the bar as well as from the pin in the direction away from the remote end of the bar, where the maximum width of the locking-nose is less than the maximum width of the anchoring opening in a bottom corner of a container and the distance between the free end of the locking-nose and the opposite end of it or respectively the face of the pin turned away from the free end of the locking-nose is less than the height of the anchoring opening in a bottom corner of a container but is great enough for the locking nose in the position of strain to engage behind the edge region of the anchoring opening in the endface of a top corner of a container, characterized in that on the pin (2) an additional locking-nose (10) is provided, which extends essentially transversely to the pin (2) and transversely to the locking-nose (5) and which in the position of strain engages behind that edge region of the anchoring opening (30) in the endface of a top corner of a container, which lies opposite the edge region behind which engages the locking-nose (5).

2. A lashing bar as in Claim 1, characterized in that the pin (2) is flattened at the side (3) adjacent to the free end (12) of the additional locking-nose (10).

3. A lashing bar as in Claim 1 or 2, characterized in that the sideface (6) of the locking-nose (5) turned away from the additional locking-nose (10) and the sideface (11) of the additional locking-nose (10) turned away from the locking-nose (5) run in each case tangentially with respect to the pin (2).

4. A lashing bar as in one of the Claims 1 to 3, characterized in that the sideface (6) of the locking-nose (5) turned away from the additional locking-nose (10) and the sideface (11) of the additional locking-nose (10) turned away from the locking-nose (5) include one right angle.

5. A lashing bar as in one the Claims 1 to 4, characterized in that the longitudinal axis of the bar (1) is inclined by about 5° to about 15° with respect to the longitudinal axis of the locking-nose (5) and away from the additional locking-nose (10).

6. A lashing bar as in one of the Claims 1 to 5, characterized in that the bar (1) is fastened to the pin (2) at its side of the latter turned away from the free end of the locking-nose (5) and that the pin (2) is prolonged beyond the region of connection to the rod (1) and exhibits at the end of it a further mirror-inverted arrangement of locking-nose (5') and additional locking-nose (10').

7. A lashing bar as in one of the Claims 1 to 5, characterized in that the bar (1) exhibits at each end of it a pin (2; 2") carrying a locking-nose (5; 5") and an additional locking-nose (10; 10") and these pins extend away from the bar in essentially the same direction with the additional locking-noses (10, 10") lying at the same side of the bar (1).

Fig. 1

Fig. 2

Fig. 3

Fig. 4

J/4

Fig. 5

Fig. 6

Fig. 7

Fig. 8

2

1

2''

5

3

10

1

10''

5''

3''